# FASCICULE DE BREVET EUROPEEN

(11) **EP 1 104 253 B1**
(45) Date de publication et mention de la délivrance du brevet: **29.10.2003**
(21) Numéro de dépôt: 99936730.3
(22) Date de dépôt: 12.08.1999
(51) Int. Cl.: A47J 27/09

(54) **JOINT INDEXE POUR AUTOCUISEUR, ET AUTOCUISEUR EQUIPE D'UN TEL JOINT**
INDEXIERBARE DICHTUNG FÜR DAMPFDRUCKKOCHER, UND DAMPFDRUCKKOCHER MIT EINER SOLCHEN DICHTUNG
INDEXED SEALING RING FOR PRESSURE COOKER, AND PRESSURE COOKER EQUIPPED THEREWITH

(30) Priorité: 13.08.1998 FR 9810481
(43) Date de publication de la demande: 06.06.2001
(73) Titulaire: SEB S.A., 69132 Ecully Cedex (FR)
(72) Inventeur: ANOTA, Daniel, Jean-Marie, F-21800 Chevigny Saint-Sauveur (FR); CHAMEROY, Eric, F-21260 Vérones (FR)
(74) Mandataire: Martin, Didier
(86) Numéro de dépôt international: FR9901980
(87) Numéro de publication internationale: WO00008984

(56) Documents cités:
- EP-A- 0 671 140
- DE-A- 3 618 231
- DE-B- 1 042 205
- DE-B- 1 076 922
- FR-A- 2 414 318

## Description

L'invention se rapporte au domaine des autocuiseurs sous pression comportant une cuve et un couvercle muni d'un joint destiné à assurer l'étanchéité entre le couvercle et la cuve lorsque l'autocuiseur est mis en pression.

La présente invention concerne un joint de sécurité à indexation destiné à être monté dans le couvercle d'un autocuiseur en vue d'assurer l'étanchéité à la pression entre le couvercle et la cuve de l'autocuiseur, ainsi qu'un autocuiseur dont le couvercle est apte à recevoir un joint de sécurité à indexation.

### TECHNIQUE ANTERIEURE

Il est déjà connu de prévoir d'équiper les autocuiseurs, de type à baïonnette par exemple, d'un joint d'étanchéité annulaire réalisé en matériau élastomère déformable, afin d'assurer l'étanchéité entre la cuve et le couvercle lors de la mise en pression de l'autocuiseur.

Les aspects de sécurité de fonctionnement des autocuiseurs sont également bien connus en raison de la pression élevée pouvant régner à l'intérieur de l'appareil en cours de cuisson et des risques encourus en cas de surpression. C'est ainsi que, pour améliorer les systèmes de sécurité sur les autocuiseurs, il existe plusieurs dispositifs de sécurité susceptibles d'être activés simultanément ou successivement en cas de dépassement d'une pression limite de fonctionnement. Il est ainsi bien connu de faire coexister sur des autocuiseurs un ou plusieurs dispositifs de sécurité incluant une ou plusieurs vannes de sécurité avec un dispositif de sécurité impliquant la déformation du joint d'étanchéité.

Ainsi, il est déjà connu d'avoir recours à une extrusion du joint d'étanchéité en ménageant une ouverture sur le bord latéral du couvercle afin de permettre au joint de se déplacer vers l'extérieur en s'extrudant à travers l'ouverture en cas de surpression. L'extrusion du joint s'accompagne d'un déplacement de la lèvre inférieure du joint vers le bas au-delà de sa position d'étanchéité ce qui provoque une fuite brutale de fluide vers le bas, le long des parois de la cuve de l'autocuiseur. Un tel dispositif, même s'il fournit incontestablement une fonction de sécurité supplémentaire à l'autocuiseur, souffre de désavantages puisqu'il nécessite une opération industrielle supplémentaire lors de la réalisation du couvercle liée à la réalisation d'une ouverture dans ce dernier. En outre la fuite brutale de fluide vers l'extérieur et vers le bas de l'appareil peut avoir pour conséquence d'une part d'éteindre éventuellement l'élément de chauffage avec des conséquences secondaires néfastes en matière de sécurité, et d'autre part de risquer de projeter brutalement vers l'extérieur, et éventuellement vers l'utilisateur, un fluide brûlant sous pression.

Pour améliorer un tel dispositif, et en particulier pour diminuer les effets violents de l'extrusion du joint, il a été envisagé de développer des joints avec des formes particulières. Ainsi, il a déjà été proposé de supprimer la fenêtre d'extrusion du joint habituellement ménagée dans le couvercle, et de ménager sur toute la périphérie interne et externe du joint annulaire, une série d'encoches associées par paires avec des séries d'entailles internes. En fonctionnement, lors de surpression occasionnelle, le joint se déforme radialement au niveau d'une ou plusieurs paires d'encoches/entailles ce qui provoque une fuite progressive de fluide vers le bas de l'appareil. Un tel dispositif assure une fuite relativement progressive du fluide vers l'extérieur, mais complique la réalisation du joint annulaire en raison de la multiplicité des conformations à réaliser ce qui par ailleurs peut être à l'origine de fuites en utilisation normale. Par ailleurs, un tel dispositif de sécurité oblige à multiplier le nombre d'encoches/entailles sur la périphérie du joint pour assurer la présence d'au moins une encoche/entaille opérationnelle lorsque le joint est en place entre les rampes de la cuve et le couvercle. En effet, la présence des rampes de la cuve s'oppose au déplacement des lèvres du joint vers le bas sur certains secteurs circulaires.

Il a enfin déjà été proposé pour tenter de résoudre les problèmes évoqués précédemment, de réaliser un joint de sécurité indexé dans le couvercle. A cette fin, le joint est pourvu sur sa périphérie de deux languettes radiales destinées à être insérées dans une ouverture ménagée dans le bord périphérique latéral du couvercle pour indexer la rotation du joint avec celle du couvercle. Dans cette réalisation, le joint comporte une encoche sur sa périphérie interne en association géométrique avec les entailles d'indexation afin d'assurer l'extrusion du joint à travers l'ouverture.

Un tel dispositif de sécurité présente néanmoins l'inconvénient de nécessiter la réalisation d'une ouverture d'extrusion dans le couvercle. De surcroît, les inconvénients mentionnés précédemment au sujet de l'extrusion demeurent, à savoir une fuite brutale de fluide vers le bas en cas de surpression. Par ailleurs, un tel dispositif laisse toujours la possibilité de monter dans le couvercle d'un tel autocuiseur un joint standard, non spécifiquement prévu pour être adapté à un tel autocuiseur, c'est-à-dire dépourvu d'entailles d'indexation. Une telle alternative de montage peut bien évidemment être considérée comme une source potentielle de dysfonctionnement de l'appareil et nuit globalement à sa sécurité d'utilisation.

Un autre exemple de joint indexé est décrit dans DE-C-1076922 qui propose d'indexer la position du joint par la réalisation de deux ergots dans le couvercle, destinés à venir s'insérer dans deux ouvertures du joint. En association avec ces deux moyens d'indexation, il est prévu, comme dans toutes les réalisations connues de joints à indexation, de réaliser une fenêtre dans le bord tombé du couvercle pour assurer l'extrusion locale du joint à travers cette dernière en cas de surpression. Les désavantages de cette solution sont les mêmes que ceux évoqués pour la réalisation précédente mettant en oeuvre un joint indexé.

### EXPOSE DE L'INVENTION

Les objets assignés à l'invention visent en conséquence à porter remède aux différents inconvénients de l'art antérieur mentionnés précédemment et à proposer un nouveau joint de sécurité à indexation pour autocuiseur permettant d'améliorer la sécurité globale de l'autocuiseur tout en étant de conception et de réalisation particulièrement simple.

Un autre objet de l'invention vise à proposer un nouveau joint de sécurité à indexation pour autocuiseur permettant une réalisation du joint et du couvercle de l'autocuiseur particulièrement simple, ainsi qu'une mise en place aisée du joint.

Un autre objet de l'invention vise à proposer un autocuiseur à sécurité renforcée et dont la conception est simplifiée.

Les objets assignés à l'invention sont atteints à l'aide d'un joint de sécurité à indexation destiné à être monté dans le couvercle d'un autocuiseur en vue d'assurer l'étanchéité à la pression entre le couvercle et la cuve de l'autocuiseur, ledit joint comportant un moyen de fixation relatif entre le joint et le couvercle pour indexer la rotation du joint avec celle du couvercle, caractérisé en ce qu'il comporte au moins une encoche externe à sa périphérie, pour permettre en cas de surpression interne dans l'autocuiseur, une déformation radiale du joint au niveau de l'encoche externe.

Les objets assignés à l'invention sont également atteints à l'aide d'un autocuiseur comportant une cuve et un couvercle pour recevoir un joint de sécurité à indexation.

### DESCRIPTIF SOMMAIRE DES DESSINS

Les avantages et détails de l'invention seront explicités dans la description qui suit à l'aide des dessins annexés ci-après, donnés à titre purement illustratif et non limitatif, dans lesquels :
- la figure 1 montre, selon une vue de dessus partielle, un exemple de réalisation d'un joint de sécurité conforme à l'invention.
- la figure 2 montre, selon une coupe transversale partielle, une première variante de réalisation du montage d'un joint conforme à l'invention dans le couvercle d'un autocuiseur.
- la figure 3 montre, selon une vue en coupe transversale partielle, une seconde variante de réalisation du montage d'un joint de sécurité conforme à l'invention dans le couvercle d'un autocuiseur.
- la figure 4 montre, selon une vue en coupe transversale partielle, un troisième exemple de réalisation du montage d'un joint de sécurité conforme à l'invention dans le couvercle d'un autocuiseur.
- la figure 5 montre, selon une vue en coupe transversale partielle, une quatrième variante de réalisation du montage d'un joint de sécurité conforme à l'invention dans un couvercle d'autocuiseur.
- la figure 6 montre, selon une vue en coupe transversale partielle prise le long de la ligne VI-VI de la figure 1, un joint de sécurité conforme à l'invention en position de repos.
- la figure 7 montre, selon une vue en coupe transversale partielle identique à celle de la figure 6, un joint conforme à l'invention en position active de dégagement lors d'une surpression.
- la figure 8 montre, selon une vue de dessus, une variante de réalisation d'un joint conforme à l'invention installé sur un autocuiseur en position de verrouillage du couvercle.

### MEILLEURE MANIERE DE REALISER L'INVENTION

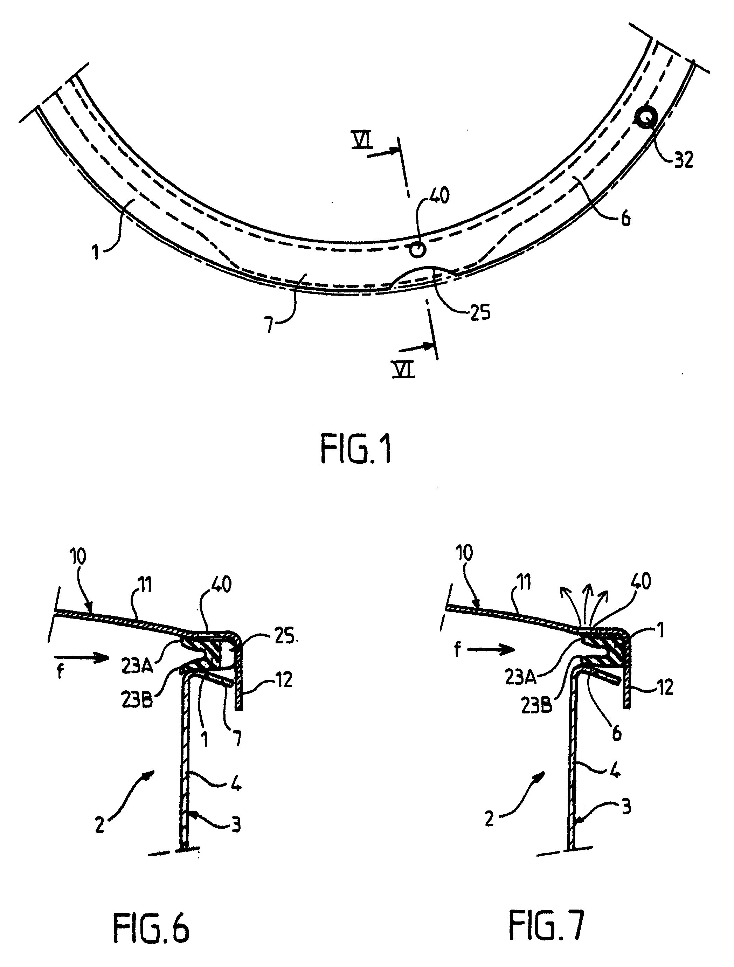

Les figures 1 à 7 illustrent un dispositif de sécurité conforme à l'invention comportant en association un joint 1 de sécurité à indexation ainsi qu'un autocuiseur 2.

Les figures 1 à 7 montrent un autocuiseur de type classique à baïonnettes, réalisé par emboutissage à partir d'un matériau métallique et comportant une cuve 3, par exemple sensiblement circulaire incluant un fond (non représenté aux figures) et des parois latérales 4.

L'autocuiseur 2 est du type à fermeture à baïonnettes et comporte à cet effet un rebord supérieur 6 prolongeant, selon une direction radiale externe, la partie supérieure de la paroi latérale 4. Le rebord supérieur 6 est pourvu sur sa circonférence d'un ensemble de rampes 7 (figure 1) réparties de manière régulière à la périphérie du rebord supérieur 6. Les rampes 7 sont destinées à former le système de fermeture à baïonnettes avec une série de contre-rampes ménagées dans le couvercle 10 de l'autocuiseur.

Le couvercle 10 est destiné à servir, dans sa partie externe périphérique, de siège de montage pour le joint 1 tel que cela est montré aux figures 1 à 7.

Le couvercle 10 comporte de manière classique un bord périphérique tombé 12 prolongeant la face supérieure 11 du couvercle.

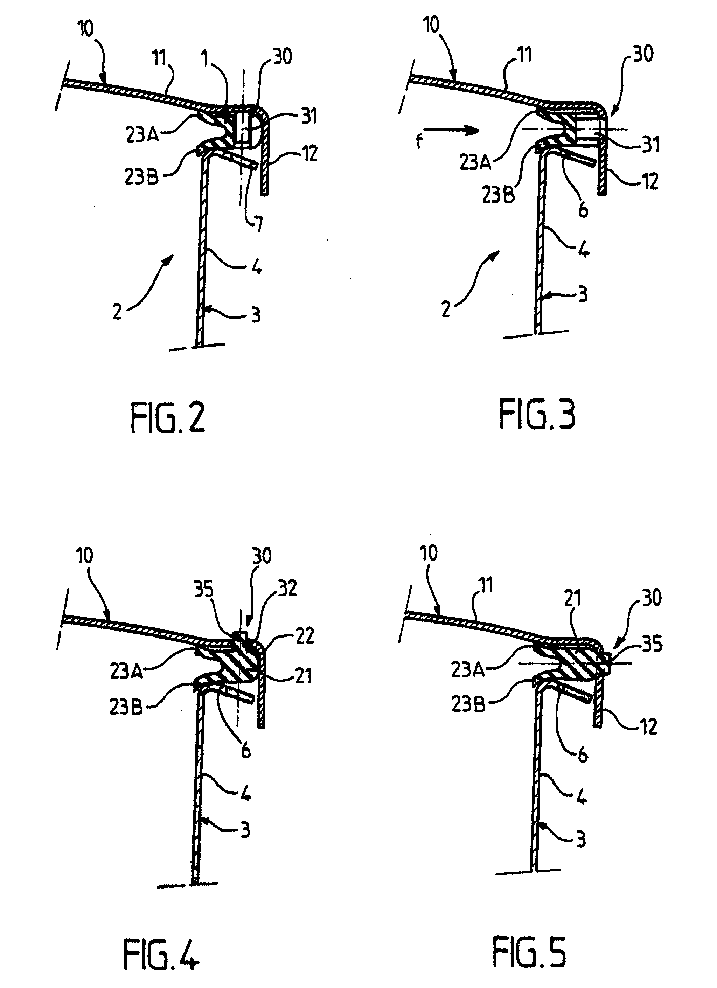

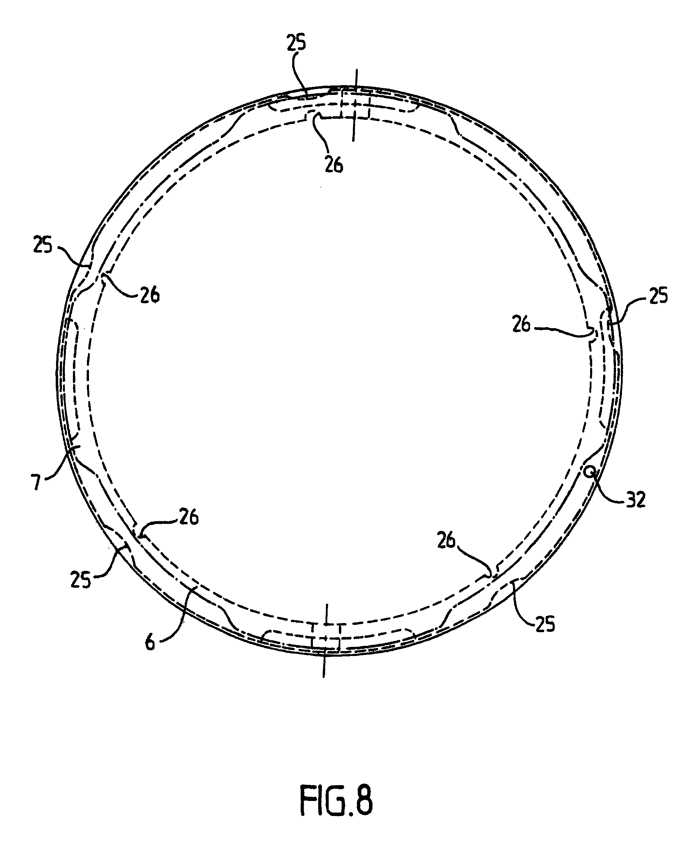

Le joint 1 se présente sous la forme d'un joint annulaire réalisé en un matériau élastomère déformable, tel que du silicone. Le joint 1 comprend de manière classique un talon 21 (figures 4 et 5) formant la partie centrale du joint 1 dont la face externe périphérique forme un bord frontal 22 destinée à venir reposer contre la face interne, ou une partie seulement, du bord tombé 12.

De manière également classique, le joint 1 comporte à partir du talon 21 et en direction opposée au bord frontal 22, deux lèvres terminales, 23A, 23B, formant respectivement une lèvre supérieure et inférieure.

Selon l'invention, le joint de sécurité 1 est à indexation et comporte au moins une encoche externe 25 (figures 1 et 6) ménagée à la périphérie du joint 1 dans la masse du talon 21 et à partir du bord frontal 22. Selon une version avantageuse de l'invention telle que montrée à la figure 1, l'encoche externe 25 se présente sous la forme d'une découpe régulière courbe s'étendant sensiblement sur toute la hauteur du joint 1, c'est à dire du bord frontal 22 et dont la concavité est tournée vers l'extérieur du joint. A la place d'une forme de découpe concave régulière, d'autres formes sont bien évidemment envisageables, par exemple en U, en V, en W..., sans pour autant sortir du cadre de l'invention. De la même façon, le joint 1 de sécurité à indexation conforme à l'invention peut comprendre à sa périphérie plusieurs encoches externes 25 réparties à intervalles réguliers ou non à la périphérie du joint. Néanmoins, la variante préférentielle de l'invention comporte une seule et unique encoche 25. La fonction de l'encoche externe 25 est de permettre en cas de surpression interne dans l'autocuiseur 2, une déformation radiale du joint localisée précisément au niveau de l'encoche 25 pour permettre au bord frontal 22 situé dans l'encoche externe 25 de venir, par déformation, au contact de la face interne du bord tombé 12 (figures 6 et 7).

Selon l'invention, l'indexation du joint de sécurité 1 est obtenue à l'aide d'un moyen de fixation 30 relatif entre le joint 1 et le couvercle 10 pour indexer la rotation du joint 1 avec celle du couvercle 10. De cette façon, le joint 1 de sécurité à indexation conforme à l'invention est mis en place dans le couvercle 10 selon une seule et unique position, et toute rotation du couvercle 10 implique également une rotation du joint 1 de la même valeur angulaire relativement à la cuve 3.

Avantageusement, le moyen de fixation 30, tel que cela est montré aux figures 2 à 5, comprend un élément mâle et un élément femelle destinés à coopérer entre eux en vue de réaliser la fixation relative du joint 1 et du couvercle 10.

Selon une première variante de réalisation illustrée aux figures 2 et 3, l'élément mâle est supporté ou solidaire du couvercle 10, et est par exemple formé par une proéminence 31, telle qu'un axe ou un ergot, de préférence serti dans ledit couvercle. Selon cette variante, l'élément femelle est ménagé dans le corps du joint 1, l'élément mâle étant destiné à pénétrer dans l'élément femelle. Selon les variantes illustrées aux figures 2 et 3, l'élément femelle est formé par un orifice 32, traversant ou non, ménagé dans le talon 21 du joint 1.

Selon la variante illustrée à la figure 2, la proéminence 31 est solidaire de la face supérieure 11 du couvercle 10 et s'étend à partir de sa face interne, à proximité du bord tombé 12, sensiblement parallèlement à ce dernier et sensiblement verticalement en considération de la figure. La proéminence 31 est de préférence métallique et également de préférence fixée au couvercle 10 par sertissage. Selon cette variante, l'orifice 32 (figure 1) est ménagé dans le talon 21 selon un axe sensiblement perpendiculaire au plan d'extension du joint 1 afin que la proéminence 31 puisse pénétrer dans ledit orifice 32 lorsque le joint 1 est mis en place dans le couvercle 10 tel que cela est montré à la figure 2.

La variante de réalisation illustrée à la figure 3, ne diffère de celle montrée à la figure 2 que par l'orientation géométriquement différente du moyen de fixation. Dans la version illustrée à la figure 3, l'orientation est radiale, la proéminence 31 étant solidaire de la face interne du bord tombé 12 et s'étendant radialement à partir de ce dernier en direction du centre de l'autocuiseur 2. Selon cette variante, l'orifice 32 est ménagé dans le talon 21 du joint 1 à partir de son bord frontal 22 selon un axe sensiblement radial dirigé en direction des lèvres 23A et 23B et en direction du centre de l'autocuiseur 2.

Selon les variantes de réalisation montrées aux figures 4 et 5, l'élément mâle est réalisé non plus à partir du couvercle 10, mais à partir du corps même du joint 1 et est de préférence issu du corps même du talon 21.

Ainsi, la variante de réalisation illustrée à la figure 4, montre un élément mâle formé par un ergot 35 issu du corps même du talon 21 et s'étendant de préférence à partir de sa face supérieure en direction du couvercle 10. Avantageusement, l'ergot 35 s'étend à partir de la partie centrale du talon 21 selon une direction sensiblement normale au plan moyen d'extension du couvercle 10, ledit ergot étant destiné à pénétrer dans une ouverture 32 ménagée à travers la face supérieure 11 du couvercle 10. Bien évidemment, la position de l'orifice 32 est réalisée pour que le joint 1 étant mis en place dans le couvercle 10 par insertion de l'ergot 35 dans l'ouverture 32, le joint 1 puisse assurer sa fonction prioritaire d'étanchéité entre le couvercle 10 et la cuve 2, et ce quelle que soit la variante de réalisation considérée.

La variante de réalisation illustrée à la figure 5 ne diffère de celle illustrée à la figure 4 que par la direction radiale du l'ergot 35 et de l'orifice 32 relativement au centre de l'autocuiseur 2 et/ou à son axe de symétrie principal. Selon cette variante, l'ergot 35 est issu du corps du talon 21 et s'étend radialement à partir de son bord frontal 22, l'orifice 32 étant ménagé de manière conjuguée à partir du bord tombé 12.

Le fonctionnement du dispositif de sécurité conforme à l'invention est le suivant.

Le joint 1 étant mis en position dans le couvercle par insertion relative de l'élément mâle 30 dans l'élément femelle 32, et le couvercle 10 relativement fermé de manière hermétique sur la cuve 3, la montée en pression de l'appareil peut s'effectuer. Lorsque la pression de cuisson dépasse une valeur critique, et à supposer que les dispositifs de sécurité additionnels n'aient pas fonctionné, le joint 1 est soumis à une pression radiale f (voir figures 3, 6 et 7) de telle sorte que la face de l'encoche externe 25 est amenée au contact du bord tombé 12. Au cours de ce déplacement, la lèvre inférieure 23B est amenée progressivement à se déplacer radialement dans le sens de la force f. Au cours et en fin de ce déplacement, la lèvre inférieure 23B passe au-dessus du bord terminal du rebord 6 et s'échappe au-dessus dudit bord vers le bas induisant une fuite progressive du fluide vers le bas. Selon l'invention, l'échappement de la lèvre inférieure 23B peut être avantageusement favorisé et ajustée en réduisant ponctuellement la longueur du rebord 6, par simple rognage dudit bord de cuve à une position angulaire située au droit de la position de l'encoche externe 25.

L'invention permet en conséquence de monter un profil de joint spécifique à un couvercle empêchant le montage d'un joint standard dans le couvercle en raison de la présence du moyen de fixation relatif 30 entre le joint et le couvercle. Les aspects sécuritaires de l'autocuiseur sont ainsi renforcés puisque seul un joint parfaitement adapté à l'autocuiseur considéré peut être mis en place dans l'autocuiseur et fonctionner avec le maximum d'efficacité.

Par ailleurs, la conception du joint 1 de l'invention est considérablement simplifiée puisqu'il ne nécessite, de manière avantageuse, que la réalisation d'une encoche externe 25 et d'un orifice 32 ou d'un ergot 35. Pour des raisons de sécurité, notamment pour éviter une mise en place défectueuse du joint par retournement, le joint sera pourvu de deux encoches 25, voire d'une série de cinq encoches externes 25, tel que montré à la figure 8. Selon cette variante, les encoches externes 25 sont réparties de manière régulière à la périphérie du joint 1 et associées chacune à une paire d'encoches internes 26 ménagées dans chaque lèvre 23A, 23B au droit et au centre de chaque encoche externe 25. Une telle réalisation améliore la sécurité de fonctionnement de la déformation éventuelle du joint 1. Enfin, la réalisation d'un joint indexé conforme à l'invention permet de maîtriser et de localiser parfaitement la zone de fuite dans l'autocuiseur puisque la position du joint est parfaitement connue et répétitive. Au total, les aspects de sécurité et de simplicité de conception sont ainsi grandement améliorés.

A titre de variante complémentaire, il est possible d'associer le joint indexé conforme à l'invention avec un autocuiseur dont le couvercle 10 est pourvu d'un trou de fluage 40 (figures 1, 6 et 7) ménagé à travers sa face supérieure 11. Le trou 40 est réalisé dans le couvercle 10 pour que lorsque le joint 1 est mis en place et indexé relativement au couvercle 10, le trou 40 soit sensiblement au droit de l'encoche externe 25, et de préférence centré relativement à son axe de courbure. Selon cette variante complémentaire, le déplacement radial du joint 1 permet à la lèvre supérieure 23A de dégager progressivement l'ouverture 40 (figures 6 et 7) pour permettre une fuite progressive de l'air vers le haut lors du déplacement radial centrifuge du joint découvrant progressivement le trou de fluage 40.

La zone de réalisation du moyen de fixation relatif 30 entre le joint et le couvercle peut être réalisée selon l'une quelconque des positions angulaires possibles de l'autocuiseur 2.

### POSSIBILITE D'APPLICATION INDUSTRIELLE

L'invention trouve son application industrielle dans la fabrication de joints d'étanchéité pour appareils domestiques de cuisson sous pression et en particulier pour autocuiseurs.

## Revendications

1. Joint (1) de sécurité à indexation destiné à être monté dans le couvercle (10) d'un autocuiseur (2) en vue d'assurer l'étanchéité à la pression entre le couvercle (10) et la cuve (3) de l'autocuiseur, **caractérisé en ce qu'**il comporte au moins une encoche externe (25) à sa périphérie, pour permettre en cas de surpression interne dans l'autocuiseur, une déformation radiale du joint au niveau de l'encoche externe (25).

2. Joint selon la revendication 1 **caractérisé en ce que** chaque encoche externe (25) se présente sous la forme d'une découpe régulière courbe, s'étendant sensiblement sur toute la hauteur du joint (1).

3. Joint selon les revendications 1 ou 2 **caractérisé en ce qu'**il comporte au moins deux encoches externes (25), et de préférence cinq encoches externes (25) réparties de manière régulière à la périphérie du joint (1).

4. Couvercle comportant un joint selon l'une des revendications 1 à 3 avec un moyen de fixation (30) relatif entre le joint (1) et le couvercle (10) pour indexer la rotation du joint (1) avec celle du couvercle (10), **caractérisé en ce que** le moyen de fixation (30) comprend un élément mâle (31, 35) et un élément femelle (32) destinés à coopérer entre eux.

5. Couvercle selon la revendication 4 **caractérisé en ce que** l'élément mâle (31) est supporté par le couvercle (10), l'élément femelle (32) étant ménagé dans le joint (1).

6. Couvercle selon la revendication 5 **caractérisé en ce que** l'élément mâle est formé par une proéminence (31), de préférence sertie dans le couvercle (10), destinée à pénétrer dans l'élément femelle, formé par un orifice (32) ménagé dans le talon (21) du joint (1).

7. Couvercle selon la revendication 6 **caractérisé en ce que** la proéminence (31) est solidaire de la face supérieure (11) du couvercle (10), l'orifice (32) étant ménagé dans le talon (21) du joint (1), selon une direction sensiblement perpendiculaire au plan d'extension du joint (1).

8. Couvercle selon la revendication 7 **caractérisé en ce que** la proéminence (31) est solidaire du bord tombé (12) périphérique du couvercle (10), l'orifice (32) étant ménagé dans le talon (21) du joint (1) selon une direction sensiblement radiale.

9. Couvercle selon la revendication 4 **caractérisé en ce que** l'élément mâle (35) est supporté par le joint (1), et de préférence est une partie intégrante du joint (1), l'élément femelle étant une ouverture (32) ménagée à travers le couvercle (10).

10. Couvercle selon la revendication 9 **caractérisé en ce que** l'élément mâle est formé par un ergot (35) issu du corps même du talon (21) du joint (1), de préférence à sa partie supérieure, ledit ergot étant destiné à pénétrer dans l'ouverture (32) ménagée à travers la face supérieure (12) du couvercle (10).

11. Couvercle selon la revendication 9 **caractérisé en ce que** l'élément mâle est formé par un ergot (35) issu du corps même du talon (21) du joint (1) et s'étendant radialement à partir du rebord frontal (22) du talon (21), ledit ergot étant destiné à pénétrer dans l'ouverture (32) ménagée à travers le bord tombé (12) périphérique du couvercle (10).

12. Autocuiseur de préférence à baïonnettes comportant une cuve (3) et un couvercle (10) selon l'une des revendications 4 à 11, ledit couvercle étant pourvu d'un joint (1) de sécurité à indexation conforme à l'une des revendications 1 à 3.

13. Autocuiseur selon la revendication 12 **caractérisé en ce qu'**il comporte un couvercle (10) pourvu d'un trou de fluage (40) ménagé dans sa face supérieure (11), pour permettre une fuite progressive de l'air vers le haut, lors du déplacement radial centrifuge du joint (1) découvrant progressivement le trou de fluage (40).

## Patentansprüche

1. Indexierbare Sicherheitsdichtung (1) zur Montage im Deckel (10) eines Dampfdruckkochers (2) zur Sicherung der Druckdichtigkeit zwischen dem Deckel (10) und dem Topf (3) des Dampfdruckkochers (2), **dadurch gekennzeichnet, daß** mindestens eine äußere Kerbe (25) an seinem Umfang vorgesehen ist, um im Fall von innerem Überdruck im Dampfdruckkocher eine radiale Verformung der Dichtung auf der Höhe der äußeren Kerbe (25) zuzulassen.

2. Dichtung gemäß Anspruch 1, **dadurch gekennzeichnet, daß** jede äußere Kerbe (25) sich in der Form eines regelmäßig gekrümmten Einschnitts darstellt, der sich im wesentlichen über die ganze Höhe der Dichtung (1) erstreckt.

3. Dichtung gemäß Anspruch 1 oder 2, **dadurch gekennzeichnet, dass** mindestens zwei äußere Kerben (25) und vorzugsweise fünf äußere Kerben (25) gleichmäßig verteilt am Umfang der Dichtung (1) vorgesehen sind.

4. Deckel mit einer Dichtung gemäß einem der Ansprüche 1 bis 3 mit einem relativen Befestigungsmittel (30) zwischen der Dichtung (1) und dem Deckel (10), um die Drehung der Dichtung (1) zu dem Deckel (10) zu indizieren, **dadurch gekennzeichnet, dass** das Befestigungsmittel (30) ein hervorstehendes Element (31, 35) und ein aufnehmendes Element (32) aufweist, die vorgesehen sind, unter einander zusammen zu wirken.

5. Deckel gemäß Anspruch 4, **dadurch gekennzeichnet, dass** das hervorstehende Element (31) gehalten ist von dem Deckel (10), wobei das aufnehmende Element (32) in dem Deckel (10) untergebracht ist.

6. Deckel gemäß Anspruch 5, **dadurch gekennzeichnet, dass** das hervorstehende Element gebildet ist von einem Vorsprung (31), der vorzugsweise in dem Deckel (10) gefasst ist und dazu vorgesehen ist in das aufnehmende Element (32) einzudringen, das gebildet ist durch eine Öffnung (32), die in dem Absatz (21) der Dichtung (1) untergebracht ist.

7. Deckel gemäß Anspruch 6, **dadurch gekennzeichnet, dass** der Vorsprung (31) aus der oberen Fläche (11) des Deckels (10) gebildet ist, wobei die Öffnung (32) in dem Absatz (21) der Dichtung (1) untergebracht ist entlang einer im wesentlichen radialen Richtung.

8. Deckel gemäß Anspruch 7, **dadurch gekennzeichnet, dass** der Vorsprung (31) aus dem abfallenden Rand (12) am Umfang des Deckels (10) gebildet ist, wobei die Öffnung (32) in dem Absatz (21) der Dichtung (1) untergebracht ist entlang einer im wesentlichen radialen Richtung.

9. Deckel gemäß Anspruch 4, **dadurch gekennzeichnet, dass** das hervorstehende Element (31) gehalten ist von der Dichtung (1) und vorzugsweise ein integraler Teil der Dichtung (1) ist, wobei das aufnehmende Element eine Öffnung (32) ist, die quer zum Deckel (10) untergebracht ist.

10. Deckel gemäß Anspruch 9, **dadurch gekennzeichnet, dass** das hervorstehende Element (31) gebildet ist aus einem Sporn (35), der aus dem Körper selbst des Absatzes (21) der Dichtung (1) hervorgeht, wobei der Sporn bestimmt ist in die Öffnung (32) einzudringen, die quer zur oberen Fläche (12) des Deckels (10) untergebracht ist.

11. Deckel gemäß Anspruch 9, **dadurch gekennzeichnet, dass** das hervorstehende Element (31) gebildet ist aus einem Sporn (35), der aus dem Körper selbst des Absatzes (21) der Dichtung (1) hervorgeht, und sich im wesentlichen radial erstreckt von dem vorderen Rand (22) des Absatzes (21), wobei der Sporn bestimmt ist in die Öffnung (32) einzudringen, die quer zu dem abfallenden Rand (12) am Umfang des Deckels (10) untergebracht ist.

12. Dampfdruckkocher, vorzugsweise vom Typ Bajonetten, mit einem Topf (3) und einem Deckel (10) gemäß einem der Ansprüche 4 bis 11, wobei der Deckel versehen ist mit einer indexierbaren Sicherheitsdichtung (1) gemäß einem der Ansprüche 1 bis 3.

13. Dampfdruckkocher gemäß dem Anspruch 12, **dadurch gekennzeichnet, daß** er einen Deckel (10) aufweist, der mit einem Durchlaß (40) versehen ist, der in seiner oberen Fläche (11) untergebracht ist, um ein zunehmendes Entweichen von Luft nach oben zu ermöglichen bei radial zentrifugaler Verschiebung der Dichtung (1), wobei der Durchlaß (40) zunehmend geöffnet wird.

## Claims

1. Safety seal (1) with positive location intended to be mounted in the lid (10) of a pressure cooker (2) with a view to providing a pressure seal between the lid (10) and the vessel (3) of the pressure cooker, **characterised in that** it comprises at least one external notch (25) at its periphery to allow, in the event of internal overpressure in the pressure cooker, radial deformation of the seal at the external notch (25).

2. Seal according to Claim 1, **characterised in that** each external notch (25) is in the form of a regular curved cutout extending substantially over the entire height of the seal (1).

3. Seal according to Claims 1 or 2, **characterised in that** it comprises at least two external notches (25), and preferably five external notches (25) distributed regularly at the periphery of the seal (1).

4. Lid comprising a seal according to one of Claims 1 to 3 with a means of relative fixing (30) between the seal (1) and the lid (10) in order to link the rotation of the seal (1) to that of the lid (10), **characterised in that** the fixing means (30) comprises a male element (31, 35) and a female element (32) intended to cooperate with each other.

5. Lid according to Claim 4, **characterised in that** the male element (31) is supported by the lid (10), the female element (32) being provided in the seal (1).

6. Lid according to Claim 5, **characterised in that** the male element is formed by a protuberance (31), preferably crimped in the lid (10), intended to enter the female element, formed by an orifice (32) provided in the heel (21) of the seal (1).

7. Lid according to Claim 6, **characterised in that** the protuberance (31) is integral with the top face (11) of the lid (10), the orifice (32) being provided in the heel (21) of the seal (1), in a direction substantially perpendicular to the extension plane of the seal (1).

8. Lid according to Claim 7, **characterised in that** the protuberance (31) is integral with the peripheral falling edge (12) of the lid (10), the orifice (32) being provided in the heel (21) of the seal (1) in a substantially radial direction.

9. Lid according to Claim 4, **characterised in that** the male element (35) is supported by the seal (1), and is preferably an integral part of the seal (1), the female element being an opening (32) provided through the lid (10) .

10. Lid according to Claim 9, **characterised in that** the male element is formed by a lug (35) issuing from the actual body of the heel (21) of the seal (1), preferably at its upper part, the said lug being intended to enter the opening (32) provided through the top face (12) of the lid (10).

11. Lid according to Claim 9, **characterised in that** the male element is formed by a lug (35) issuing from the actual body of the heel (21) of the seal (1) and extending radially from the front edge (22) of the heel (21), the said lug being intended to enter the opening (32) provided through the peripheral falling edge (12) of the lid (10).

12. Pressure cooker, preferably of the bayonet type, comprising a vessel (3) and a lid (10) according to one of Claims 4 to 11, the said lid being provided with a safety seal (1) with positive location in accordance with one of Claims 1 to 3.

13. Pressure cooker according to Claim 12, **characterised in that** it comprises a lid (10) provided with a flow hole (40) provided in its top face (11) to allow a progressive leakage of air upwards, during the centrifugal radial movement of the seal (1) progressively uncovering the flow hole (40).
